Europäisches Patentamt

European Patent Office

Office européen des brevets

(19)

(11) Veröffentlichungsnummer: **0 002 863**
**B1**

(12) **EUROPÄISCHE PATENTSCHRIFT**

(45) Veröffentlichungstag der Patentschrift: 08.02.84

(51) Int. Cl.³: **C 09 J 3/12**

(21) Anmeldenummer: **78200371.9**

(22) Anmeldetag: **15.12.78**

(54) Klebstoffe und deren Verwendung.

(30) Priorität: **22.12.77 DE 2757177**

(43) Veröffentlichungstag der Anmeldung:
**11.07.79 Patentblatt 79/14**

(45) Bekanntmachung des Hinweises auf die Patenterteilung:
**08.02.84 Patentblatt 84/6**

(84) Benannte Vertragsstaaten:
**BE CH DE FR GB IT NL SE**

(56) Entgegenhaltungen:
**DE - A - 1 959 141**
**US - A - 3 023 200**

(73) Patentinhaber: **HOECHST AKTIENGESELLSCHAFT**
**Postfach 80 03 20**
**D-6230 Frankfurt am Main 80 (DE)**

(72) Erfinder: **Werner, Gerhard, Dr.**
**zum Talblick 50**
**D-6241 Glashütten (DE)**
Erfinder: **Schmelzer, Heinz**
**Schlossbergstrasse 15**
**D-6531 Rümmelsheim (DE)**
Erfinder: **Sattelmeyer, Richard, Dr.**
**Nonnenwaldweg 20**
**D-6229 Schlangenbad-Georgenborn (DE)**

Klebstoffe und deren Verwendung

Die Erfindung betrifft einen Klebstoff aus Kautschuk und einem Klebharz auf Basis von Additionsprodukten aus Dicyclopentadien und aromatischen Kohlenwasserstoffen. Es ist bekannt, daß Polymerisate und Copolymerisate des Dicyclopentadiens als Klebharze wenig geeignet sind. Wegen ihres hohen Doppelbindungsgehaltes sind sie sehr oxydationsanfällig, was insbesondere zur schlechten Lagerbeständigkeit der Klebmittel beiträgt. Auch die thermische Beständigkeit solcher Polymerisate ist gering.

Um die leichte Oxydierbarkeit der Dicyclopentadienharze herabzusetzen, können größere Mengen an Stabilisatoren zugemischt werden. Diese führen jedoch häufig zu schlechteren Klebwerten. Es wurde auch schon versucht, die Doppelbindungen durch katalytische Hydrierung zu beseitigen. Solche hydrierten Harze weisen eine gute Oxydations- und Wärmebeständigkeit auf und haben sich in Klebmitteln gut bewährt. Jedoch entsprechen diese Produkte zuweilen nicht den an Klebstoffe gestellten gesteigerten Anforderungen.

Aus der US—PS—3.023.200 sind Additionsprodukte aus Dicyclopentadien und aromatischen Verbindungen, die Alkylreste am Kern tragen, bekannt. Sie werden in Gegenwart von Friedel-Crafts Katalysatoren hergestellt und enthalten nur eine geringe Menge an unlöslichen Polymerisaten und Gelen. Diese löslichen Verbindungen besitzen eine gute Stabilität gegen Farbänderung und Oxydation.

In der DE—OS—19 59 141 wird die Verwendung dieser aus der US-Patentschrift bekannten Verbindungen in Mischung mit einem aliphatischen, thermoplastischen, von polymerisierten Aromaten im wesentlich freien Kohlenwasserstoffharz als sogenannte Harzstreckmittelmischung zusammen mit einem Äthylenmischpolymerisat und einem Wachs als Heißschmelzkleber für die Beschichtung von Teppichrücken beschrieben. Diese Kombinationen sind zwar für den genannten Zweck gut verwendbar, sie eignen sich jedoch nicht zur Herstellung von druckempfindlichen Klebstoffen und Haftklebern. Es wurde nun gefunden, daß man aber auch solche Klebstoffgemische herstellen kann. Gegenstand der Erfindung ist ein Klebstoffgemisch aus A) Natur- und/oder Synthesekautschuk in Kombination mit B) einem Klebharz auf der Basis von Additionsprodukten aus Dicyclopentadien und aromatischen Kohlenwasserstoffen mit einem Anteil an Cyclopentadien-Strukturen im Additionsprodukt von 40—80 Gew.-% und 20—60 Gew.-% des aromatischen Kohlenwasserstoffs, dadurch gekennzeichnet, daß der Anteil des Klebharzes B), das ein mittleres Molgewicht von 300—5000, Jodzahlen von 0 bis 60 und Schmelztemperaturen von 30—150°C hat und mindestens einen aromatischen Kohlenwasserstoff mit einem Siedebereich von 110—220°C der Gruppe Alkylaromaten und/oder Tetrahydronaphthalln enthält, 40—120 Gew.-% bezogen auf den Kautschuk beträgt.

Die Klebharze B) sind nicht nur technisch einfacher und kostengünstiger herzustellen als hydrierte Cyclopentadienharze, sondern weisen gleichzeitig in Klebmitteln eine bessere Abschälfestigkeit auf.

Das Klebharz B) wird auf bekannte Weise durch Friedel-Crafts-Reaktion hergestellt. Dabei müssen die Reaktionsbedingungen so gewählt werden, daß die Dissoziation und Homopolymerisation des Dicyclopentadiens möglichst vermieden und die Alkylierungsreaktion begünstigt wird. Es wird deshalb zweckmäßig so gearbeitet, daß der Friedel-Crafts-Katalysator in Aromaten vorgelegt und das Dicyclopentadien kontinuierlich zugegeben wird. Bei dieser Arbeitsweise werden die Doppelbindungen des Dicyclopentadiens durch Addition von Aromaten beinahe vollkommen abgesättigt, so daß die optimalen Harze nur noch Jodzahlen von 0 bis 5 haben. Sie unterscheiden sich deshalb deutlich von den stark ungesättigten Dicyclopentadien-Homo-polymerisaten.

Als Aromaten können unter anderem Toluol, Xylol, Cumol, Cymol, Trimethylbenzole, Tetrahydronaphthalin oder deren Gemische verwendet werden. Bevorzugt werden jedoch Xylol-Handelsprodukte, deren Gehalt an meta-Xylol über 50 Gew.-% liegt.

Als Friedel-Crafts-Katalysator hat sich Aluminiumtrichlorid besonders bewährt. Nach Reaktionsende wird der Katalysator nach üblichen Verfahren entweder mit Calciumhydroxyd, Natriumbicarbonat, Soda oder anderen Oxyden oder Salzen ausgefällt oder mit Wasser ausgewaschen. Anschließend wird der nicht umgesetzte aromatische Kohlenwasserstoff durch Destillation entfernt, sofern nicht eine Lösung in einem damit verträglichen Lösungsmittel, z.B. aromatischer Kohlenwasserstoffen, hergestellt werden soll.

Die Eigenschaften der Klebharze B) können durch die Art und Menge der verwendeten Aromaten, durch die Konzentration des Katalysators sowie durch die Reaktionsbedingungen der Addition in weiten Grenzen variiert werden. Sie sind in aromatischen Kohlenwasserstoffen, wie Benzol, Toluol und Xylol löslich. Die bevorzugten Harze zeigen auch gute Verträglichkeit mit aliphatischen Kohlenwasserstoffen, wie Cyclohexan, Heptan, Benzin mit einem Siedebereich von 60 bis 95°C. Sie sind mit anderen üblichen Klebharzen C), wie Kolophonium-, Terpenharzen, vorzugsweise Terpenphenolharzen, Kolophoniumestern, Kohlenwasserstoffharzen, z.B. hydrierten Cyclopentadienharzen und außerdem mit verschiedenen Wachsen verträglich und können mit diesen zusammen verwendet werden bzw. die obigen Klebharze zumindest teilweise ersetzen. Das Gewichtsverhältnis Klebharz B): Klebharz C) kann dabei z.B. 1:9 bis 9:1 betragen. Antioxydantien und Stabilisatoren können nach Bedarf zugesetzt werden.

Die weitreichende Verträglichkeit, die ausgezeichnete Oxydations- und Wärmebeständigkeit sowie die hervorragende klebrigmachende Wirkung der Klebharze B) bedingen eine breite Einsatzmöglichkeit in Klebstoffen verschiedener Art, z.B. Haftklebern.

Bei druckempfindlichen Klebstoffen werden sie zweckmäßig in Kombination mit Naturkautschuk oder synthetischen Elastomeren, z.B. Styrol-Butadien-Kautschuk, Chloroprenkautschuk, Acrylnitril-Butadien-Kautschuk verwendet. Als Klebharz in lösungsmittelhaltigen Haftklebern, insbesondere solchen auf Basis von Natur-Kautschuk zeichnen sich die Klebharze B) durch sehr gute Kohäsion und Adhäsion aus.

Der Anteil der Klebharze B) kann in den Klebstoffen beispielsweise 40 bis 120, vorzugsweise 70 bis 110 Gew.-%, bezogen auf das Elastomere betragen.

In den nachstehenden Beispielen bedeutet T Gewichtsteile und % Gewichtsprozent. Die Viskosität wurde, wenn nicht anders angegeben, jeweils in 70%iger Toluollösung bei 20°C gemessen.

Beispiele
I. Herstellung der Additionsprodukte
a) Zu einem Gemisch aus 5 T Aluminiumtrichlorid und 300 T technischem Xylol (60% m-, 11% o-, 5% p-Xylol, 22% Äthylbenzol) werden bei 30°C 100 T Dicyclopentadien (95 %ig) unter Rühren zugetropft. Anschließend läßt man das Gemisch noch 2 Stunden bei dieser Temperatur nachreagieren und zersetzt den Katalysator mit 50 ml Wasser. Die wäßrige Phase wird abgetrennt und die Reaktionslösung noch drei Mal mit 50 ml Wasser ausgewaschen. Daraufhin wird das nicht umgesetzte Xylol abdestilliert. Lösungsmittelreste werden bei 250°C durch Destillation unter vermindertem Druck entfernt. Es bleiben 195 T Harz zurück. Kenndaten: Schmelztemperatur 65 bis 75°C (Kapillarmethode), Viskosität 350 mPa.s, mittleres Molgewicht 620, Jodzahl 2.

b) Es wird gearbeitet wie unter a), jedoch bei einer Reaktionstemperatur von 45°C. Man erhält 195 T Harz mit folgenden Kenndaten: Schmelztemperatur 50 bis 55°C, Viskosität 180 mPa.s, mittleres Molgewicht 420, Jodzahl 4.

c) Es wird gearbeitet wie unter a), jedoch werden 400 T Xylol verwendet. Man erhält 210 T Harz mit folgenden Kenndaten: Schmelztemperatur 58 bis 62°C, Viskosität 220 mPa.s, mittleres Molgewicht 540, Jodzahl 3.

d) Es wird gearbeitet wie unter 1a), jedoch werden an Stelle von 300 T technischen Xylol 250 T 1,2,4.-Trimethylbenzol genommen. Die Ausbeute beträgt 240 T Harz. Kenndaten: Schmelztemperatur 60 bis 63°C (Kapillarmethode), Viskosität 210 mPa.s, mittleres Molgewicht 450, Jodzahl 6.

e) Es wird gearbeitet, wie unter 1a) jedoch werden an Stelle von 300 T technischem Xylol 250 T 1,2,3-Trimethylbenzol genommen. Die Ausbeute beträgt 224 T Harz. Kenndaten: Schmelztemperatur 61 bis 64°C (Kapillarmethode), Viskosität 190 mPa.s, mittleres Molgewicht 470, Jodzahl 8.

Wegen der geringeren Verträglichkeit der Produkte von Beispiel 1e) gehören diese nicht zu den bevorzugten Harzen.

f) Vergleichsharz
Hydriertes, thermisch polymerisiertes Cyclopentadienharz des Handels mit folgenden Kenndaten: Schmelztemperatur 86 bis 90°C, Bromzahl 3, Viskosität 340 mPa.s.

II. Lösungsmittelhaltige Haftkleber
Eine Klebmittel-Lösung wird folgendermaßen hergestellt: Mischungen aus 100 T Naturkautschuk und 80 T Harz nach Beispielen a) bis e) sowie das Vergleichsharz f) werden jeweils in 600 T Benzin (Siedetemperatur 60 bis 95°C) gelöst.

Physikalische Prüfung
Als Trägermaterial dienende Prüfbänder aus einer Folie aus Polyäthylenterephthalat wurden mit der Klebstofflösung in einer Naßschichtdicke von 200 μm und 15 mm Breite beschichtet Von den so hergestellten Klebstreifen wurde das Lösungsmittel durch 20 Minuten langes Stehenlassen bei Raumtemperatur und 20 Minuten dauerndes Stehenlassen bei 50°C entfernt. Anschließend wurden die Prüfstreifen unter atmosphärischen Bedingungen (23°C/50% Luftfeuchtigkeit) gelagert und nach 24 Stunden sowie 14 Tagen gemessen.

Zur Ermittlung der Abschälfestigkeit wurde in Anlehnung an die Vorschrift PSTC-1 (Pressure Sensitive Tape Concil) Streifen der Abmessung 1,5×10 cm der vorstehend beschriebenen, beschichteten Folie auf eine gereinigte Standardstahlplatte mit einer 1 kg schweren Walze 10 mal ohne zusätzlichen Druck aufgewalzt. Nach 30 Minuten wurde die Abschälfestigkeit (Newton/15 mm) unter einem Winkel von 180° bei einem Vorschub von 300 mm/Minute in einer Zerreißmaschine gemessen.

Die sogenannte "Rolling Ball Tack"-Prüfung wurde in Anlehnung an die Vorschrift PSTC-6 vorgenommen. Das Gerät besteht aus einer schiefen Ebene mit einem Neigungswinkel von 31°. Die Gefällstrecke ist 5 cm lang. Die schiefene Ebene führt auf eine waagerechte Auslaufebene aus Glas, auf welcher der zu prüfende Klebstreifen befestigt wird. Als Prüfkörper dient eine Stahlkugel von 10 mm Durchmesser, die man von der schiefen Ebene auf den Klebestreifen hinunterrollen läßt. Die durchlaufende Strecke auf dem Prüfmaterial ist ein Maß für die Klebrigkeit ("Tack").

# 0 002 863

Prüfergebnisse
Die Tabelle enthält die mittleren Meßwerte.

| Klebstoff mit additionsprodukt | Abschälfestigkeit Newton/15 mm | | Rolling-ball-tack mm | | |
|---|---|---|---|---|---|
| | 1 Tag | 14 Tage | 1 Tag | 14 Tage | 50 Tage |
| a) | 6,5 | 8,0 | 3 | 9 | — |
| b) | 6,0 | 7,0 | 2 | 8 | — |
| c) | 5,5 | 5 | 2 | 7 | — |
| d) | 5 | 5 | 2 | 4 | 4 |
| e) | 5 | 5 | 2 | 4 | 4 |
| f) (Vergleich) | 5 | 4 | 3 | 8 | — |

Die erhaltenen Ergebnisse zeigen, daß die Alkylierungsprodukte zum Teil zu etwa gleichen, größtenteils jedoch zu besseren Klebrigkeitswerten führen als das Vergleichsharz. Dagegen liegt die Abschälfestigkeit bei den erfindungsgemäßen Proben deutlich höher als die der Vergleichsprobe.

## Patentansprüche

1. Klebstoffgemisch aus A) Natur- und/oder Synthesekautschuk in Kombination mit B) einem Klebharz auf der Basis von Additionsprodukten aus Dicyclopentadien und aromatischen Kohlenwasserstoffen hergestellt in Gegenwart eines Friedel-Crafts-Katalysators mit einem Anteil an Cyclopentadien-Strukturen im Additionsprodukt von 40—80 Gew.-% und 20—60 Gew.-% des aromatischen Kohlenwasserstoffs, dadurch gekennzeichnet, daß der Anteil des Klebharzes B), das ein mittleres Molgewicht von 300—5000, Jodzahlen von 0 bis 60 und Schmelztemperaturen von 30—150°C hat und mindestens einen aromatischen Kohlenwasserstoff mit einem Siedebereich von 110—220°C der Gruppe Alkylaromaten und/oder Tetrahydronaphthalin enthält, 40—120 Gew.-%, bezogen auf den Kautschuk beträgt.

2. Klebstoff nach Anspruch 1, dadurch gekennzeichnet, daß die Klebharze B) ein mittleres Molgewicht von 400 bis 1000, Jodzahlen von 0 bis 10, vorzugsweise 0 bis 5 und Schmelztemperaturen von 40 bis 100°C haben.

3. Klebstoff nach Anspruch 1 oder 2, dadurch gekennzeichnet, daß die aromatische Komponente der Klebharze B) einen wesentlichen Anteil m-Xylol enthält, aber vorzugsweise aus m-Xylol besteht.

4. Klebstoff nach einem oder mehreren der Ansprüche 1—3, dadurch gekennzeichnet, daß ein Klebharz B) eingesetzt wird, das durch kontinuierliche Zugabe von Dicyclopentadien zu einer Mischung aus Katalysator und aromatischen Kohlenwasserstoff hergestellt worden ist.

5. Klebstoff nach einem oder mehreren der Ansprüche 1 bis 4, dadurch gekennzeichnet, daß der Anteil des Klebharzes B) 70 bis 110 Gew.-%, bezogen auf den Kautschuk, ausmacht.

6. Klebstoff nach einem oder mehreren der Ansprüche 1 bis 5, dadurch gekennzeichnet, daß er C) ein zusätzliches Klebharz enthält, wobei das Gewichtsverhältnis Klebharz B) zu zusätzlichem Klebharz C) 1:9 bis 9:1 beträgt.

7. Klebstoff nach Anspruch 6, dadurch gekennzeichnet, daß das zusätzliche Klebharz C) ein Terpenphenolharz ist.

8. Klebstoff nach Anspruch 6, dadurch gekennzeichnet, daß das zusätzliche Klebharz C) ein Kolophonium-, Terpen-, Kohlenwasserstoffharz oder ein Kolophoniumester ist.

9. Verwendung der Klebstoffgemische nach einem oder mehreren der Ansprüche 1 bis 8 als druckempfindliche Klebstoffe oder lösungsmittelhaltige Haftkleber.

## Revendications

1. Mélange pour colle constitué A) d'un caoutchouc naturel et/ou d'un caoutchouc de synthèse, associé à B) une résine adhésive à base de produits d'addition dérivant du dicyclopentadiène et d'hydrocarbures aromatiques, produits qui ont été préparés en présence d'un catalyseur de Friedel-Crafts et qui ont une teneur en structures cyclopentadiéniques de 40 à 80% en poids et une teneur en hydrocarbure aromatique de 20 à 60% en poids, mélange caractérisé en ce que la proportion de la résine adhésive B), laquelle a une masse moléculaire moyenne de 300 à 5000, un indice d'iode de 0 à 60 et une température de fusion de 30 à 150°C et qui contient au moins un hydrocarbure aromatique bouillant dans l'intervalle allant de 110 à 220°C et appartenant à l'ensemble constitué par les hydrocarbures aromatiques alkylés et le tétrahydronaphtalène, représente de 40 à 120% en poids par rapport au caoutchouc.

2. Colle selon la revendication 1 caractérisée ne ce que la résine adhésive B) a une masse moléculaire moyenne de 400 à 1000, un indice d'iode de 0 à 10, de préférence de 0 à 5, et une température de fusion de 40 à 100°C.

3. Colle selon l'une des revendications 1 et 2, caractérisée en ce que la composante aromatique de la résine adhésive B) contient une

4

grande quantité de m-xylène mais est de préférence constituée de m-xylène.

4. Colle selon l'une quelconque des revendications 1 à 3, caractérisée en ce qu'elle comporte une résine adhésive B) que l'on a préparée en ajoutant continuellement du dicyclopentadiène à un mélange constitué du catalyseur et d'un hydrocarbure aromatique.

5. Colle selon l'une quelconque des revendications 1 à 4, caractérisée en ce que sa teneur en résine adhésive B) est de 70 à 110% en poids par rapport au caoutchouc.

6. Colle selon l'une quelconque des revendications 1 à 5, caractérisée en ce qu'elle contient C) une résine adhésive supplémentaire, le rapport pondéral de la résine adhésive B) à la résine supplémentaire C) étant compris entre 1:9 et 9:1.

7. Colle selon la revendication 6, caractérisée en ce que la résine adhésive C) supplémentaire est une résine terpène-phénol.

8. Colle selon la revendication 6 caractérisée en ce que la résine adhésive supplémentaire C) est une résine de collophane, une résine terpénique, une résine hydrocarbonée ou un ester de la colophane.

9. Application des mélanges pour colles selon l'une quelconque des revendications 1 à 8 comme colles piézosensibles ou comme adhésifs de contact renfermant un solvant.

**Claims**

1. Adhesive composition of A) natural- and/or synthetic rubber in combination with B) an adhesive resin on the basis of addition products of dicyclopentadiene and aromatic hydrocarbons prepared in the presence of a Friedel-Crafts catalyst with an amount of cyclopentadiene-units in the addition product of from 40 to 80% by weight and 20 to 60% by weight of the aromatic hydrocarbon, characterized in that the amount of adhesive resin B) is from 40 to 120% by weight, based on the rubber, said resin B) having a mean molecular weight of from 300 to 5000, iodine numbers of from 0 to 60 and melting temperatures of from 30 to 150°C and containing at least one aromatic hydrocarbon having a boiling point in the range of from 110 to 220°C of the group alkyl aromatic hydrocarbons and/or tetrahydronaphthalene.

2. Adhesive according to claim 1, characterized in that the adhesive resins B) have a mean molecular weight of from 400 to 1000, iodine numbers of from 0 to 10, preferably 0 to 5 and melting temperatures of from 40 to 100°C.

3. Adhesive according to claim 1 or 2 characterized in that the aromatic component of the adhesive resins B) contains a substantial proportion of m-xylene, but preferably consists of m-xylene.

4. Adhesive according to one or more of the claims 1 to 3, characterized in that a adhesive resins B) is employed which has been prepared by continuous addition of dicyclopentadiene to a mixture of a catalyst and an aromatic hydrocarbon.

5. Adhesive according to one or more of the claims 1 to 4, characterized in that the amount of the adhesive resin B) is from 70 to 110% by weight, based on rubber.

6. Adhesive according to one or more of the claims 1 to 5, characterized in that it contains C) an additional adhesive resin, wherein the weight ratio of adhesive resin B) to the additional adhesive resin C) is from 1:9 to 9:1.

7. Adhesive according to claim 6, characterized in that the additional adhesive resin C) is a terpene-phenol resin.

8. Adhesive according to claim 6, characterized in that the additional adhesive resin C) is a colophony resin, terpene resin, hydrocarbon resin or a colophony ester.

9. Use of the adhesive compositions according to one or more of the claims 1 to 8 as pressure sensitive adhesives or solvent-containing bonding adhesives.